# DEMANDE DE BREVET EUROPEEN

(11) **EP 0 665 042 A2**
(43) Date de publication de la demande: **02.08.1995**
(21) Numéro de dépôt: 95106309.8
(22) Date de dépôt: 02.12.1991
(51) Int. Cl.: B01D 3/22, F25J 3/00, B01J 19/32

(54) **Colonne de distillation d'air à garnissage ondulé-croisé**

(30) Priorité: 17.12.1990 FR 9015756; 18.02.1991 FR 9101879; 28.02.1991 FR 9102393; 17.05.1991 FR 9105999; 19.07.1991 FR 9109150
(62) Demande divisionnaire de: 91403254.5
(71) Demandeur: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Jeannot, Jean-Pierre, F-93110 Rosny Sous Bois (FR); Lehman, Jean-Yves, F-94700 Maisons Alfort (FR)
(74) Mandataire: Mercey, Fiona Susan

(57) **Abrégé**

Cette colonne (301), du type à garnissage ondulé-croisé, comporte des moyens (310) de renvoi de liquide au voisinage des bords du garnissage et des moyens (303) de distribution du liquide et du gaz, qui contribuent à diminuer substantiellement la hauteur de la colonne.

Application aux installations de séparation des gaz de l'air.

## Description

La présente invention est relative aux colonnes de distillation d'air du type mettant en oeuvre sur au moins une partie de leur hauteur des empilements de packs de garnissage organisé du genre ondulé-croisé, chaque pack comprenant un paquet de lamelles ondulées rectangulaires disposées chacune dans un plan général vertical et les unes contre les autres, les ondes de chaque lamelle étant obliques et descendant, dans des sens opposés d'une lamelle à la suivante, d'un bord vertical haut à un bord vertical bas de la lamelle.

Des développements récents de la technique de distillation d'air ont consisté à utiliser des garnissages, notamment des garnissages organisés du type dit "ondulé-croisé", à la place des plateaux de distillation traditionnels. Ces garnissages apportent en effet un avantage important du point de vue de la perte de charge, et par suite permettent d'importantes économies de fonctionnement de l'installation. En revanche, les garnissages posent divers problèmes technologiques, liés en particulier au phénomène dit d'"effet de paroi" : le liquide descendant tend à s'accumuler sur la périphérie du garnissage ou sur la paroi qui l'entoure, puis de là à ruisseler sans échanger de chaleur ni de matière avec le gaz montant. Ceci nuit à l'uniformité de la composition du liquide sur la section de la colonne, et dégrade les performances de l'installation.

Pour réduire ces effets nocifs, on a proposé de prévoir des moyens de redistribution intermédiaires du liquide dans chaque tronçon de distillation, défini entre un ensemble d'entrée/sortie de fluides inférieur et un ensemble d'entrée/sortie de fluides supérieur. Ceci accroît la complexité des colonnes et en augmente considérablement la hauteur, ce pour deux raisons : l'augmentation du nombre de distributeurs, et la hauteur importante de chaque distributeur. Une telle augmentation de hauteur est particulièrement coûteuse pour des colonnes cryogéniques pourvues d'une isolation thermique à hautes performances et peut nécessiter l'utilisation de pompes supplémentaires de remontée de liquides, notamment de la colonne moyenne pression à la colonne basse pression.

L'invention a pour but de permettre aux colonnes de distillation d'air mettant en oeuvre des garnissages ondulés-croisés d'assurer des performances élevées avec une hauteur réduite de manière importante.

A cet effet, l'invention a pour objet une colonne de distillation d'air, du type mettant en oeuvre sur au moins une partie de sa hauteur des empilements de packs de garnissage organisé du genre ondulé-croisé, chaque pack comprenant un paquet de lamelles ondulées rectangulaires disposées chacune dans un plan général vertical et les unes contre les autres, les ondes de chaque lamelle étant obliques et descendant, dans des sens opposés d'une lamelle à la suivante, d'un bord vertical haut à un bord vertical bas de la lamelle, caractérisée en ce que les packs de garnissage comportent des moyens de réduction de HEPT (hauteur équivalente à un plateau théorique) qui comprennent, dans au moins une région de chaque pack, les deux caractéristiques suivantes :
(a) une déformation latérale asymétrique du bord bas et/ou, dans une partie médiane du garnissage où la corde du garnissage varie peu, un retrait du bord bas de chaque lamelle par rapport au bord haut des deux lamelles adjacentes; et
(b) autour du pack et entre celui-ci et une virole qui l'entoure, un dispositif d'étanchéité qui comprend d'une part une ceinture appliquée sur la périphérie du pack et comportant le long de son bord inférieur une série de dents inclinées vers l'axe de la virole, et d'autre part des moyens reliant à joint étanche la ceinture à la paroi intérieure de la virole.

Des exemples de réalisation de l'invention vont maintenant être décrits en regard des dessins annexés, sur lesquels :
- la Figure 1 représente schématiquement la constitution générale d'une installation de distillation d'air constituée de colonnes conformes à l'invention;
- la Figure 2 représente en perspective, avec arrachement partiel, un distributeur de fluides utilisé dans cette installation;
- la Figure 3 est une vue partielle de dessus du distributeur de la Figure 2;
- la Figure 4 en est une coupe transversale partielle en élévation, prise suivant la ligne IV-IV de la Figure 3;
- la Figure 5 représente schématiquement en coupe longitudinale la colonne moyenne pression de l'installation;
- la Figure 6 est une vue partielle prise en coupe suivant la ligne VI-VI de la Figure 5;
- la Figure 7 est une vue analogue de la colonne de production d'argon impur de l'installation;
- la Figure 8 est une vue analogue de la partie supérieure de la colonne basse pression;
- la Figure 9 est une vue prise en coupe suivant la ligne IX-IX de la Figure 8;
- la Figure 10 est une vue schématique en coupe longitudinale d'une partie intermédiaire de la colonne basse pression;
- la Figure 11 est une vue analogue de la partie intérieure de cette colonne basse pression;
- la Figure 12 est une vue prise en coupe suivant la ligne XII-XII de la Figure 11;
- la Figure 13 représente en perspective un détail de l'objet des Figures 11 et 12;
- la Figure 14 est une vue en élévation d'un dispositif d'étanchéité utilisé dans l'installation conforme à l'invention;
- la Figure 15 en est une vue prise en coupe suivant la ligne XV-XV de la Figure 14;
- la Figure 16 illustre schématiquement, en coupe longitudinale, une partie d'une colonne de distillation équipée du dispositif des Figures 14 et 15;
- la Figure 17 est une vue analogue d'une variante;
- la Figure 18 est une vue analogue à plus grande échelle du dispositif d'étanchéité des Figures 14 et 15 monté sur un tronçon de garnissage;
- la Figure 19 est une vue en perspective du bord bas d'une lamelle d'un garnissage ondulé-croisé;
- la Figure 20 est une vue en bout de cette lamelle et des deux lamelles adjacentes;
- la Figure 21 est une demi-vue schématique en plan du garnissage ondulé-croisé correspondant;
- la Figure 22 représente schématiquement un outillage de fabrication d'une variante du garnissage ondulé-croisé des Figures 19 à 21;
- la Figure 23 illustre, à plus grande échelle, le fonctionnement de cet outillage;
- la Figure 24 illustre en perspective une extrémité des lamelles obtenues;
- la Figure 25 est une vue partielle en plan du garnissage ondulé-croisé correspondant;
- la Figure 26 est une vue analogue à la Figure 25 d'un autre garnissage ondulé-croisé pouvant être utilisé dans l'installation suivant l'invention;
- la Figure 27 illustre de façon analogue à la Figure 23 la fabrication du garnissage de la Figure 26;
- la Figure 28 est une vue analogue à la Figure 22 d'une variante d'outillage;
- la Figure 29 est une vue partielle en plan du garnissage ondulé-croisé obtenu au moyen de cet outillage;
- la Figure 30 représente schématiquement une variante de garnissage utilisable dans l'installation suivant l'invention;
- la Figure 31 est une vue en perspective d'une variante du distributeur des Figures 2 à 4;
- la Figure 32 est une vue du distributeur de la Figure 31 prise en coupe transversale suivant la ligne XXXII-XXXII de cette Figure 31;
- les Figures 33 et 34 sont des vues partielles prises respectivement en coupe suivant les lignes XXXIII-XXXIII et XXXIV-XXXIV de la Figure 32;
- la Figure 35 est une vue analogue à la Figure 31 d'une autre variante de distributeur;
- la Figure 36 est une vue du distributeur de la Figure 35 prise en coupe transversale suivant la ligne XXXVI-XXXVI de cette Figure 35;
- les Figures 37 et 38 sont des vues par-tielles prises respectivement en coupe suivant les lignes XXXVII-XXXVII et XXXVIII-XXXVIII de la Figure 36;
- les Figures 39 et 40 sont des vues analogues aux Figures 37 et 38, respectivement, d'une modification;
- la Figure 41 est une vue partielle schématique, en coupe axiale, d'une autre colonne de distillation conforme à l'invention;
- les Figures 42 à 50 sont des vues à plus grande échelle prises en coupe, respectivement, suivant les lignes XLII-XLII de la Figure 43, XLIII-XLIII de la Figure 42, XLIV-XLIV de la Figure 46, XLV-XLV de la Figure 44, XLVI-XLVI de la Figure 44, XLVII-XLVII de la Figure 48, XLVIII-XLVIII de la Figure 47, XLIX-XLIX de la Figure 50 et L-L de la Figure 49; et
- la Figure 51 illustre une variante de l'objet de la Figure 50.

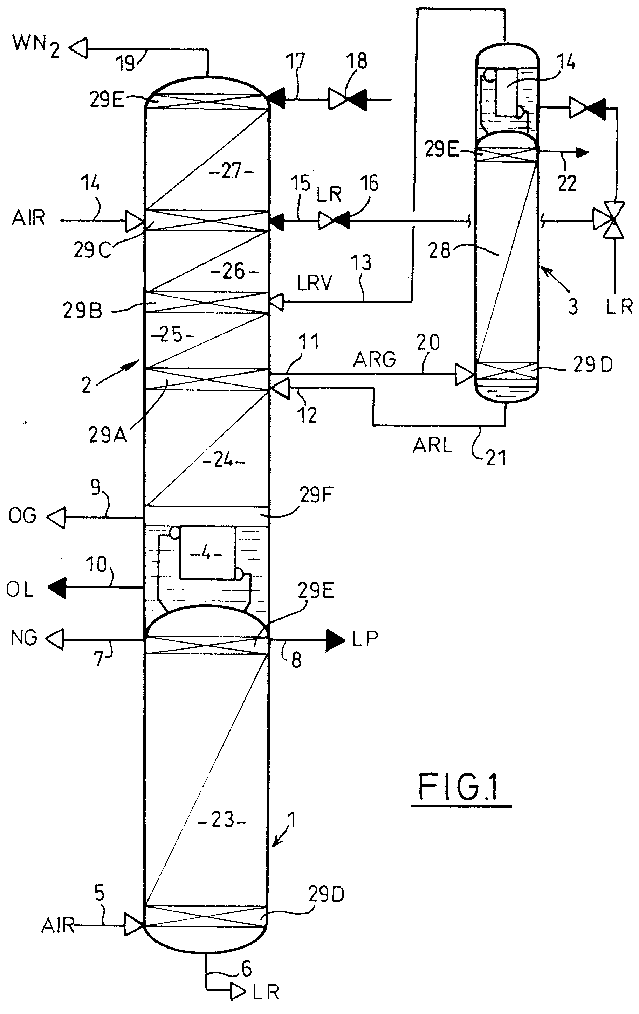

L'installation de distillation d'air représentée à la Figure 1 est constituée d'une colonne moyenne pression 1, fonctionnant typiquement sous environ 6 bars absolus, surmontée d'une colonne basse pression 2 fonctionnant typiquement légèrement au-dessus de la pression atmosphérique et à laquelle est couplée une colonne 3 de production d'argon impur. Un condenseur-vaporiseur 4 met en relation d'échange thermique la vapeur de tête de la colonne 1, constituée d'azote à peu près pur, et le liquide de cuve de la colonne 2, constitué d'oxygène à peu près pur.

L'illustration de la Figure 1 est très schématique et a essentiellement pour but de montrer les entrées/sorties de fluides de l'installation, ainsi que les tronçons de distillation qu'elles définissent.

Ainsi :
- la colonne 1 comporte deux ensembles d'entrées/sorties de fluides, à savoir, en cuve, une entrée 5 d'air à traiter et une sortie 6 de "liquide riche" (air enrichi en oxygène), et, à son sommet, une sortie 7 d'azote gazeux moyenne pression et une sortie 8 de "liquide pauvre" (azote pratiquement pur);
- la colonne 2 comporte cinq ensembles d'entrées/sorties de fluides :
   . en cuve, une sortie 9 d'oxygène gazeux et une sortie 10 d'oxygène liquide;
   . à un premier niveau intermédiaire, une sortie 11 de gaz, dite "piquage argon", conduisant à la cuve de la colonne 3, et un retour 12 de réinjection dans la colonne 2 du liquide de cuve de la colonne 3;
   . à un deuxième niveau intermédiaire, une entrée 13 de "liquide riche" vaporisé provenant du condenseur de tête 14 de la colonne 3;
   . à un troisième niveau intermédiaire, une entrée 14 d'air basse pression d'insufflation et une entrée 15 de "liquide riche" détendu dans une vanne de détente 16; et
   . en tête de colonne, une entrée 17 de "liquide pauvre" détendu dans une vanne de détente 18 et une sortie 19 de gaz résiduaire (azote impur);
- la colonne 3 de production d'argon impur comporte deux ensembles d'entrée/sortie de fluides, à savoir, en cuve, l'entrée 20 de gaz provenant de la colonne 2 et une sortie 21 de liquide de cuve conduisant à la colonne 2, et, en tête, une sortie 22 d'argon impur de production.

Ces diverses entrées/sorties de fluides définissent six tronçons de distillation, à savoir :
- dans la colonne moyenne pression 1, un unique tronçon de distillation 23 compris entre l'ensemble d'entrée/sortie inférieur 5, 6 et l'ensemble d'entrée/sortie supérieur 7,8;
- dans la colonne basse pression 2 :
   . un tronçon de distillation inférieur 24 compris entre son ensemble d'entrée/sortie inférieur 9, 10 et son ensemble d'entrée/sortie supérieur 11, 12;
   . immédiatement au-dessus de celui-ci, un premier tronçon de distillation intermédiaire 25 compris entre son ensemble d'entrée/sortie inférieur 11, 12 et son ensemble d'entrée/sortie supérieur 13;
   . immédiatement au-dessus du précédent, un second tronçon de distillation intermédiaire 26 compris entre son ensemble d'entrée/sortie inférieur 13 et son ensemble d'entrée/sortie supérieur 14, 15; et
   . un tronçon de distillation supérieur 27 compris entre son ensemble d'entrée/sortie inférieur 14, 15 et son ensemble d'entrée/sortie supérieur 17, 19;
- pour la colonne de production d'argon impur 3, un unique tronçon de distillation 28 compris entre l'ensemble d'entrée/sortie inférieur 20 et l'ensemble d'entrée/sortie supérieur 22.

Comme on le remarque, suivant le tronçon de distillation que l'on considère, un même ensemble d'entrée/sortie peut être considéré soit comme un ensemble d'entrée/sortie supérieur, soit comme un ensemble d'entrée/sortie inférieur.

Chacun des tronçons de distillation 23 à 28 est constitué par des blocs ou "packs" de garnissage organisé du type "ondulé-croisé".

Comme il est bien connu, un pack de garnissage ondulé-croisé est constitué d'un paquet de lamelles ondulées disposées chacune dans un plan général vertical et accolées les unes aux autres, chaque lamelle ayant une forme générale rectangulaire. Les la-melles sont ondulées en oblique, et le sens d'inclinaison des ondes est inversé d'une lamelle à la suivante. Toutes les lamelles ont la même hauteur, tandis que leur longueur, ou dimension horizontale, augmente d'une valeur minimale, pour une lamelle extrême, à une valeur maximale pour la lamelle médiane, puis diminue jusqu'à la même valeur minimale pour l'autre lamelle extrême.

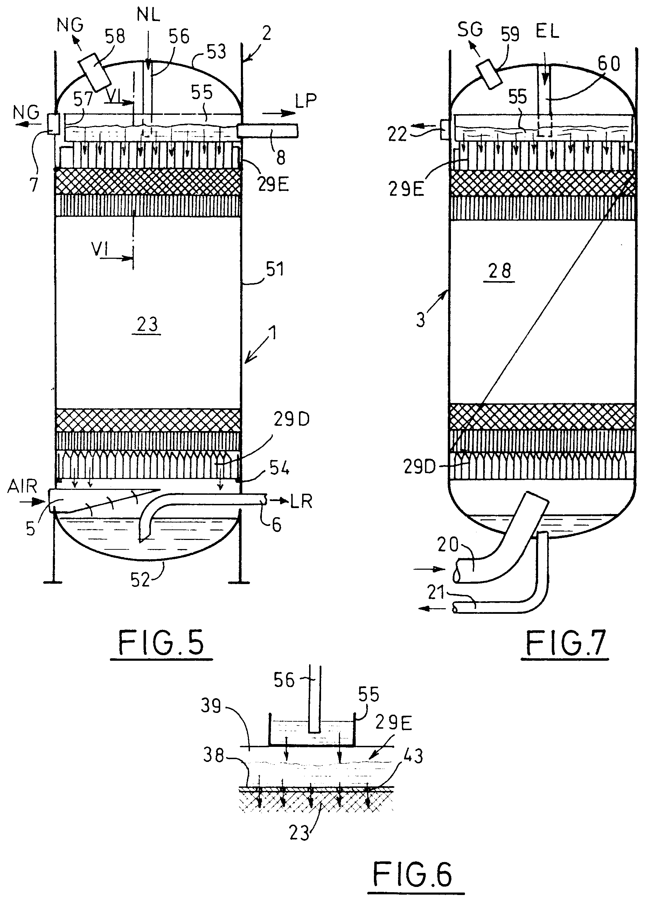

Chacun des tronçons 23 à 28 est un tronçon de garnissage continu, c'est-à-dire un tronçon constitué d'un empilement direct de packs élémentaires les uns sur les autres, sans aucun dispositif de redistribution de fluide intermédiaire, chaque pack élémentaire étant tourné de 90°, autour de l'axe de la colonne, par rapport aux deux packs adjacents, comme ceci est schématisé sur les Figures 5, 7, 8 et 11. Ceci est rendu possible, malgré la grande hauteur de certains tronçons, notamment des tronçons 23, 24 et 28, qui peuvent comporter respectivement 40, 38 et 50 plateaux théoriques, grâce à plusieurs caractéristiques qui apparaîtront dans la suite.

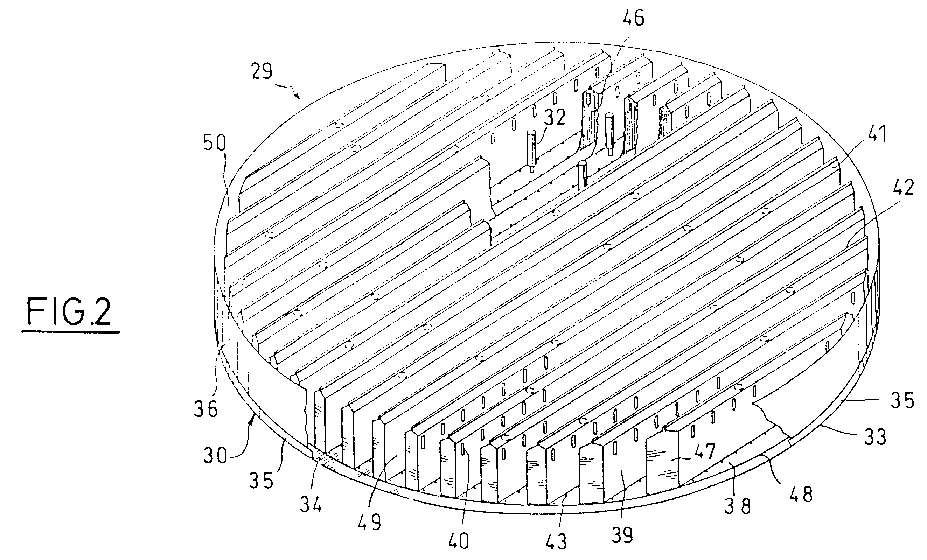

Les tronçons de distillation 24 et 25 d'une part, 25 et 26 d'autre part, 26 et 27 enfin, sont séparés les uns des autres par un distributeur sandwich, respectivement 29A, 29B et 29C, qui va maintenant être décrit en regard des Figures 2 à 4 sous la référence numérique générale 29.

Le distributeur 29 représenté aux Figures 2 à 4 est tel que décrit dans la demande de brevet FR-A-2 655 877 au nom de la Demanderesse. Ce distributeur est constitué d'une couronne périphérique 30, d'une série de profilés en U 31 et d'une série de cheminées de trop-plein 32.

La couronne 30 comprend elle-même un profilé périphérique circulaire 33 à section en L comportant une aile horizontale inférieure 34 et une bordure ex-térieure 35 dirigée vers le haut. Sur cette dernière est fixée hermétiquement une jupe cylindrique 36 en saillie vers le haut. Dans certains cas, comme on le verra plus loin, cette jupe 36 et la bordure 35 sont supprimées.

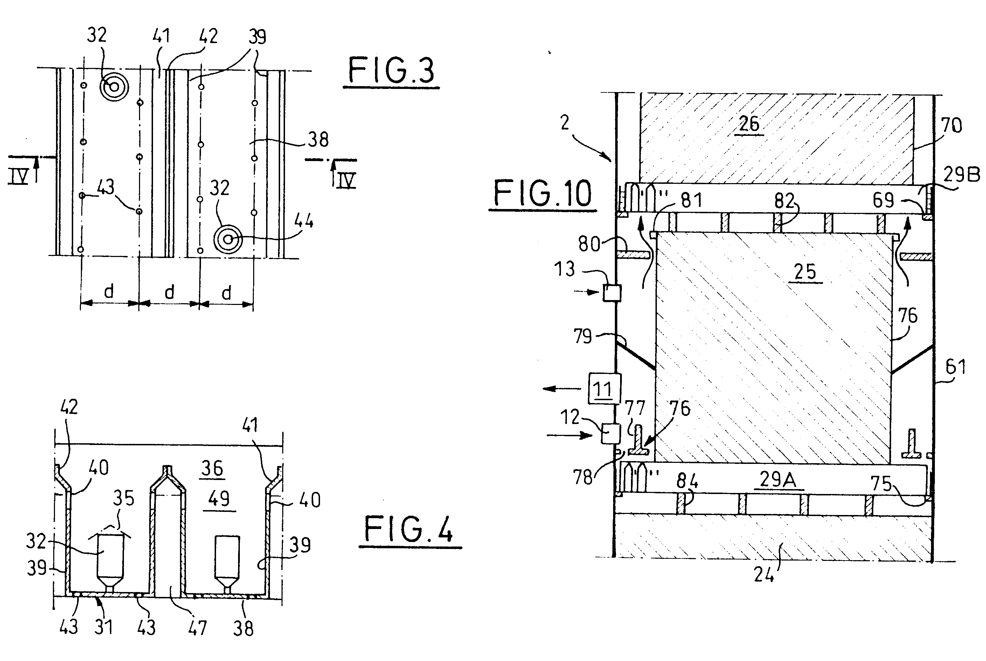

Chaque profilé 31 (Figures 3 et 4) est constitué d'un fond horizontal perforé 38 bordé par deux parois verticales parallèles 39. Chaque paroi 39 comporte, le long de son bord supérieur, une rangée horizontale d'orifices oblongs 40 à grand axe vertical, les orifices d'une paroi 39 étant décalés d'un demi-pas par rapport à ceux de la paroi 39 opposée.

Chaque paroi 39 se prolonge en oblique vers le haut et vers l'extérieur du profilé 31 en un demi-toit 41 qui se termine par une étroite bordure verticale 42 dirigée vers le haut.

Les profilés 31 sont disposés côte-à-côte, de sorte que leurs demi-toits 41 se rejoignent, les bordures 42 adjacentes s'appliquant l'une contre l'autre sur toute leur longueur et étant fixées ensemble par des moyens appropriés (non représentés) étanches au liquide mais non nécessairement étanches au gaz, par exemple par des points de soudure ou par agrafage.

Chaque fond 38 comporte une rangée de trous 43 le long de chaque paroi 39. Les deux rangées sont décalées d'un demi-pas l'une par rapport à l'autre, et le dimensionnement du demi-toit 41 est tel que, en vue en plan (Figure 3), la distance d entre les rangées de trous est la même que ces rangées appartiennent au même profilé 31 ou à deux profilés adjacents. On obtient ainsi sur toute la surface du distributeur un maillage régulier des trous 43, en vue en plan, avec une maille en forme de losange.

De plus, chaque fond 38 comporte dans son plan longitudinal médian, à des intervalles réguliers nettement supérieurs au pas des trous 43, un orifice 44 de plus grand diamètre dans lequel s'emboîte l'extrémité inférieure étroite d'une cheminée 32. Ces cheminées ont la forme d'un entonnoir qui s'élève jusqu'à un niveau légèrement inférieur à celui du bord inférieur des ouvertures 40. Un chapeau chinois conique 45, représenté en trait mixte sur la Figure 4, peut surmonter chaque cheminée 32.

Chaque profilé 31 est coupé à longueur, transversalement ou obliquement, de façon à s'appuyer par chaque extrémité sur l'aile 34 de la couronne 30. Chaque extrémité de chaque espace 46 situé entre deux profilés adjacents est obturée hermétiquement, au moins jusqu'au niveau du bord inférieur des orifices oblongs 40, par une plaquette verticale 47 de forme correspondante, soudée le long de ses bords latéraux et dont le bord inférieur affleure la face inférieure des fonds 38.

Les bords inférieurs des plaquettes 47 et les extrémités des fonds 38 sont soudés sur l'aile 34 par une soudure continue hermétique 48.

Ainsi, le distributeur définit un certain nombre d'espaces 49 de collection de liquide délimités par un fond 38 et les deux parois verticales 39 du même profilé, ces espaces 49 alternant avec les espaces 46 précités, qui sont des espaces de passage de gaz. Le distributeur définit également un canal périphérique 50, délimité par la bordure 35 et la jupe 36 de la couronne 30 et communiquant avec l'ensemble des espaces 49.

Comme on décrira plus en détail dans la suite, l'installation comporte également, en tête et en cuve de chacune des trois colonnes, des distributeurs dérivés du distributeur 29 décrit ci-dessus, à savoir un distributeur de cuve au bas de chacun des tronçons de distillation 23, 24 et 28, et un distributeur de tête au sommet de chacun de ces trois tronçons. Ces distributeurs de tête et de cuve, de par leur structure et leur liaison avec les garnissages adjacents, contribuent, comme les distributeurs intermédiaires, à réduire la hauteur des colonnes de l'installation.

La Figure 5 illustre la constitution de la colonne moyenne pression 1.

La colonne 1 comporte une virole cylindrique 51 fermée en bas par un fond bombé inférieur 52 et en haut par un fond bombé supérieur 53. Le distributeur de cuve 29D, qui a la constitution du distributeur 29 des Figures 2 à 4, repose sur des supports périphériques 54 fixés à la base de la virole. L'entrée d'air 5 et la sortie de liquide riche 6 débouchent sous ce distributeur 29D.

Le tronçon 23 a comme diamètre le diamètre intérieur de la virole et est directement posé sur les bordures supérieures 42 du distributeur 29D. Le distributeur de tête 29E repose directement sur le pack supérieur de ce tronçon 23. Ce distributeur diffère du distributeur 29D par le fait que les parois 39 sont dépourvues d'ouvertures 40 et d'ailes inclinées 41. Une goulotte 55 ouverte vers le haut (Figures 5 et 6) est posée, perpendiculairement aux parois 39, sur celles-ci, et s'étend sur presque tout le diamètre de la virole 51, au niveau du sommet de celle-ci. Le fond de cette goulotte est perforé au droit des espaces de liquide 49 du distributeur. Un tube vertical 56 de retour d'azote liquide condensé dans le vaporiseur-condenseur 4 traverse le fond 53 et pénètre dans la goulotte 55. La sortie de liquide pauvre 8 part d'une extrémité de cette goulotte. On voit également sur la Figure 5 la sortie d'azote gazeux 7, située en regard d'une plaque d'extrémité 57 de la goulotte, et un tuyau 58 qui traverse le fond 53 et amène l'azote gazeux au vaporiseur-condenseur 4.

La colonne de production d'argon impur 3, représentée à la Figure 7, à la même constitution que la colonne 1, avec toutefois les différences suivan-tes. En cuve, l'entrée de gaz et la sortie de liquide sont les entrées/sorties 20 et 21 précitées. En tête, les tuyaux 59, 60 traversant le fond supérieur conduisent la vapeur de tête vers le condenseur de tête 14 et ramènent dans la goulotte 55 le condensat. Comme précédemment, la sortie 22 d'argon impur se trouve en regard de la plaque d'extrémité de la goulotte 55, mais, bien entendu, aucune sortie de liquide en tête de colonne n'est prévue.

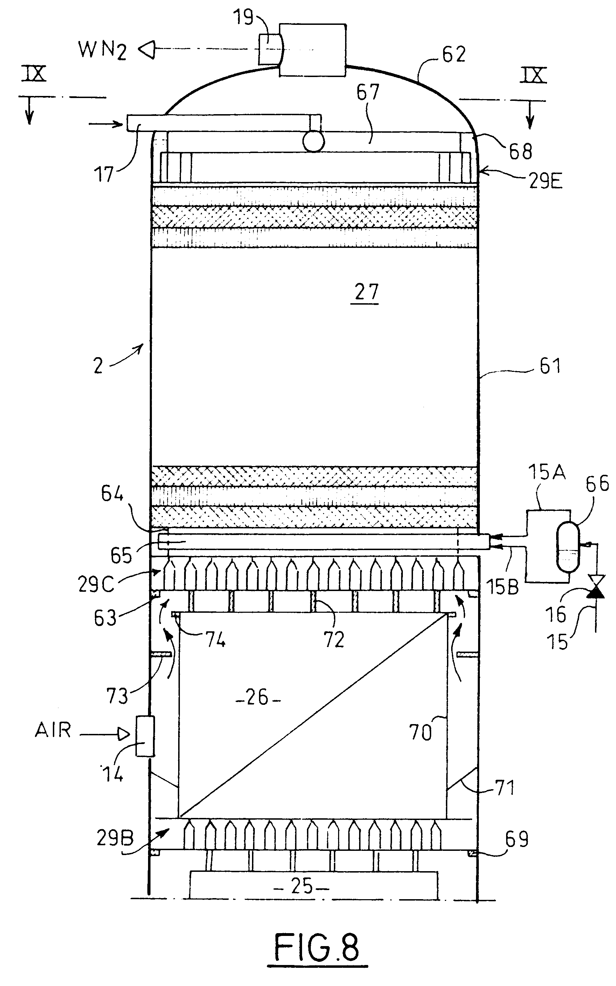

On décrira maintenant la colonne basse pression 2, de haut en bas, en regard des Figures 8 à 13.

La colonne 2 comprend une virole cylindrique 61 s'étendant sur toute sa hauteur, reliée hermétiquement à sa base au fond supérieur 53 de la colonne 1 et à son sommet à un fond supérieur bombé 62 équipé lui-même à son sommet de la sortie de gaz résiduaire 19.

Le distributeur 29C est posé sur des supports 63 solidaires de la virole. Le tronçon de distillation 27 est posé sur ce distributeur avec interposition d'entretoises 64. Ces dernières sont traversées par deux séries de tubes 65 perpendiculaires aux espaces de gaz et de liquide du distributeur. L'entrée de liquide riche 15, étant une entrée de fluide diphasique, est en fait constituée d'un séparateur de phases 66 et de deux conduites 15A, 15B partant respectivement du haut et du bas de ce séparateur et alimentant chacune l'une des deux séries de tubes. Les tubes 65 sont perforés, ceux correspondant au liquide l'étant au droit des espaces de liquide du distributeur 29C.

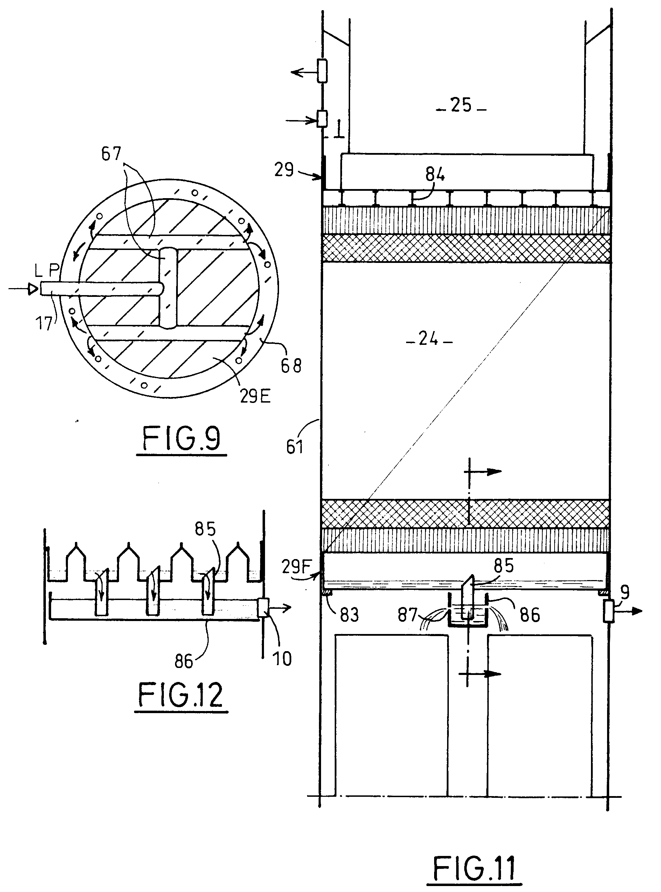

Sur le tronçon 27 repose un distributeur 29E identique à celui décrit ci-dessus. Toutefois, l'alimentation en liquide de ce distributeur est différente. Comme on le voit sur les Figures 8 et 9, l'entrée 17 est un tube qui pénètre horizontalement juste au-dessus du distributeur 29E et qui répartit le liquide, via plusieurs tubes 67 agencés en H, dans une goulotte périphérique 68 perforée au droit du canal périphérique du distributeur.

Le distributeur 29B est posé sur des supports périphériques 69 solidaires de la virole. Le tronçon de distillation 26 est enserré dans une virole auxiliaire 70 de diamètre inférieur à celui de la virole 61, et l'ensemble est posé directement sur la surface d'appui horizontale du distributeur 29B formée par l'ensemble des tranches d'extrémité des bordures 42 des profilés 41, ce qui est permis par la grande rigidité de la structure en poutres multiples du distributeur.

Un organe d'étanchéité annulaire 71 relie à joint étanche la partie inférieure de la virole 70 à la région en regard de la virole 61, et le sommet du tronçon 26 est espacé du distributeur 29C par des entretoises 72.

Un anneau 73 formant chicane est fixé à la virole 61 en regard de la partie supérieure de la virole 70, et l'entrée d'air d'insufflation 14 débouche entre cet anneau et l'organe d'étanchéité 71. Comme on le voit à la Figure 8, un autre anneau formant chicane 74 peut être fixé sur la périphérie du sommet de la virole 70.

Comme on le voit à la Figure 10, le distributeur 29A est posé sur des supports 75 solidaires de la virole 61. Le tronçon de distillation 25, qui est enserré dans une virole auxiliaire 76 dont le diamètre est inférieur à celui de la virole 70, est posé directement sur le distributeur 29A. Un anneau 76 formant chicane est fixé à la virole 61 juste au-dessus du distributeur 29A. Cet anneau comporte un rebord 77 et, entre celui-ci et la virole 61, une couronne d'orifices 78. L'entrée 12 débouche juste au-dessus de cet anneau, et la sortie 11 légèrement au-dessus de l'entrée 12. Un organe d'étanchéité annulaire 79 analogue à l'organe 71 est prévu au-dessus de la sortie 11, et un double anneau-chicane 80, 81 analogue au double anneau 73, 74 équipe la région d'extrémité supérieure de la virole 76. Le sommet du tronçon 25 est espacé du distributeur 29B par des entretoises 82. L'entrée de liquide riche vaporisé 13 débouche entre l'organe d'étanchéité 79 et le double anneau 80, 81.

En considérant la Figure 11, le distributeur de cuve 29F de la colonne 2 est porté par des supports 83 fixés à la virole 61. Le tronçon de distillation 24 est posé directement sur ce distributeur, a comme diamètre le diamètre intérieur de cette virole, et est espacé, à son sommet, du distributeur 29B par des entretoises 84.

Le distributeur 29F a la même constitution que le distributeur 29 des Figures 2 à 4, avec en plus, à mi-longueur de chaque espace de liquide, un tube de descente 85 qui débouche dans une goulotte 86 perpendiculaire auxdits espaces de liquide et supporté à ses extrémités, de façon appropriée, par la virole 61. La goulotte 86 comporte de chaque côté un déversoir 87 qui permet à l'oxygène liquide collecté d'alimenter le vaporiseur-condenseur 4, lequel, dans cet exemple, est constitué par deux corps d'échangeur de chaleur du type à ruissellement, tel que décrit dans le brevet EP-B-130 122 au nom de la Demanderesse.

En variante, les espaces de liquide du dis-tributeur 29F peuvent déverser l'oxygène liquide directement dans la cuve de la colonne 2, si le vaporiseur-condenseur 4 est d'un type plus classique à thermosiphon comme schématisé sur la Figure 1.

Dans l'exemple des Figures 11 à 13, la sortie d'oxygène gazeux 9 s'effectue juste en-dessous du distributeur 29F, et la sortie d'oxygène liquide 10 à une extrémité de la goulotte 86.

Il est à noter que la présence d'entretoises 72, 82, 84 sous les distributeurs intermédiaires facilite la bonne répartition du gaz montant dans les tronçons de distillation en cas de variations des débits de gaz soutirés ou injectés, au prix d'un léger excédent de hauteur de la double colonne. Par ailleurs, on voit que les diamètres des tronçons 25 et 26 sont réduits en fonction des entrées/sorties de gaz 11, 13 et 14, et que cette réduction de diamètre a été mise à profit pour installer les entrées/sorties de fluides sans perte de hauteur.

On va maintenant décrire un exemple de dispositif d'étanchéité pouvant assurer l'étanchéité entre un tronçon de distillation et la virole qui l'entoure, par exemple entre le tronçon 24 ou 27 et la virole 61, bien qu'il soit décrit ci-dessous de façon générale.

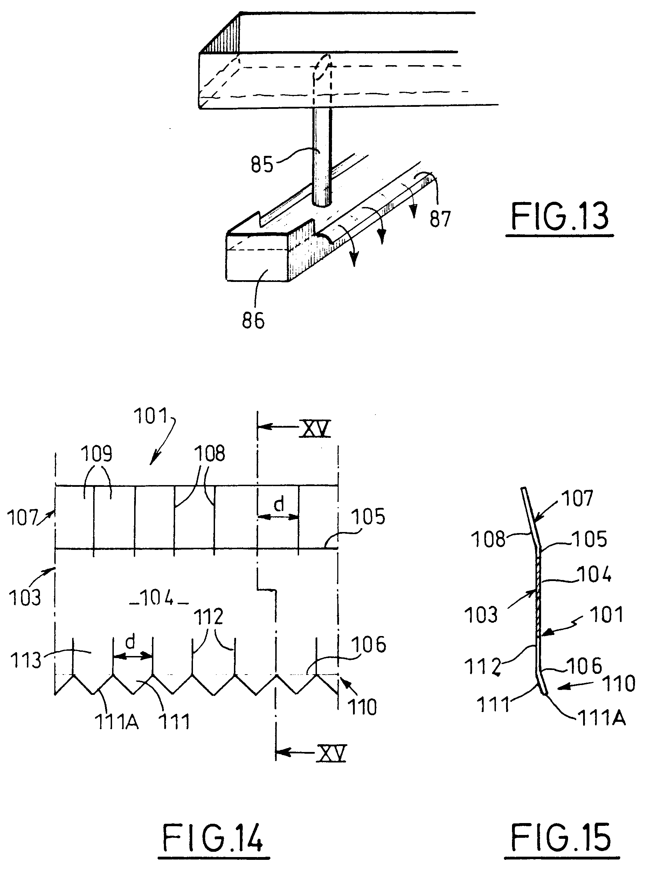

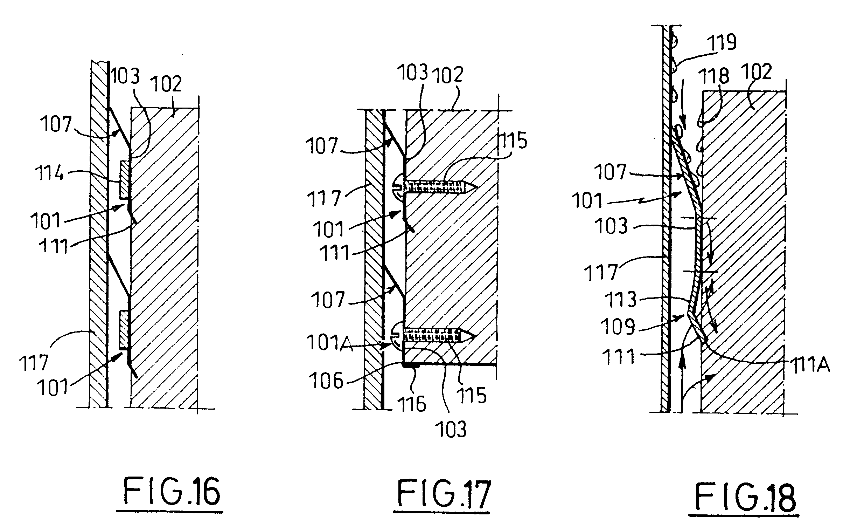

Le dispositif d'étanchéité 101 représenté aux Figures 14 et 15 est réalisé à partir d'une bande continue en une matière élastique appropriée de faible épaisseur telle qu'un métal ou une matière plastique. Cette bande est disposée autour d'un tronçon ou "pack" cylindrique 102 de garnissage du type "ondulé-croisé" représenté partiellement et schématiquement aux Figures 16 à 18, ceci de manière que ses bords d'extrémité se rejoignent et soient reliés de façon étanche par tout moyen approprié, par exemple par recouvrement et fixation simultanée sur le tronçon de garnissage.

Comme on le voit aux Figures 14 et 15, la bande précitée présente trois zones qui s'étendent sur toute sa longueur :
- une zone médiane ou ceinture 103, d'orientation verticale, dont la partie intermédiaire 104 est continue et qui est délimitée par un bord supérieur 105 et un bord inférieur 106 horizontaux;
- une zone supérieure 107 qui forme un angle aigu avec la verticale, par pliage le long du bord 105, dans un premier sens, de la partie de la bande située au-dessus de ce bord. Cette zone 107 comporte à intervalles réguliers des incisions verticales 108 qui partent de son bord supérieur libre et pénètrent légèrement dans la ceinture 103. Ces incisions 108 délimitent entre elles autant de languettes flexibles 109;
- une zone inférieure 110 constituée de dents 111 en forme de triangle isocèle, adjacentes les unes aux autres et se terminant par une pointe inférieure 111A, le bord 106 constituant l'ensemble des bases de ces triangles. Cette zone est repliée le long du bord 106 dans le sens opposé à la zone supérieure 107 (Figure 15), ce qui confère à la bande un profil en forme générale de S.

De chaque point commun à deux dents successives, situé sur le bord 106, part vers le haut une incision verticale 112 ménagée dans la ceinture 103. Les incisions 112 sont équidistantes les unes des autres et séparées de la même distance d que les incisions 108, et elles sont décalées d'un demi-pas par rapport à ces dernières. Les incisions 112 et les dents 111 définissent ainsi une série de languettes flexibles 113 adjacentes les unes aux autres.

Un premier mode de montage du dispositif, plus particulièrement adapté aux colonnes de distillation de grand diamètre, est représenté sur la Figure 16. Il s'agit d'un cerclage 114 qui applique fermement la partie intermédiaire 104 de la ceinture sur la périphérie du tronçon de garnissage 102.

En variante (Figure 17), la partie intermédiaire 104 est appliquée sur la périphérie du garnissage par vissage direct au moyen d'une ou plusieurs couronnes de vis radiales 115 qui traversent cette partie 104. Cette variante convient plus particulièrement pour les colonnes de distillation de petit diamètre.

Dans les deux cas, on peut prévoir plusieurs dispositifs d'étanchéité identiques répartis sur la hauteur du tronçon de garnissage, comme représenté sur la Figure 16, et fixer à la base de ce tronçon un dispositif analogue 101A (Figure 17) dans lequel les dents 111 et les incisions 112 sont supprimées tandis qu'un talon 116 horizontal fait saillie vers l'intérieur à partir du bord 106 et s'applique sur la tranche d'extrémité inférieure du tronçon de garnissage.

Dans tous les cas, le diamètre extérieur de la zone 107 est supérieur au diamètre intérieur de la virole 117 de la colonne de distillation. Ainsi, lorsque le tronçon de garnissage est enfilé dans cette virole 117, les languettes 109 se recourbent vers l'intérieur pour s'appliquer élastiquement contre la paroi intérieure de la virole, de sorte que l'on obtient à cet emplacement une étanchéité au gaz et au liquide.

La Figure 18 représente plus en détail la configuration du dispositif 101 après sa fixation sur un tronçon de garnissage 102, cette fixation étant supposée réalisée au moyen de deux couronnes de vis indiquées par leurs axes : seule la partie 104 est appliquée contre la périphérie cylindrique du tronçon 102, et les dents 111 pénètrent plus ou moins entre les lamelles du garnissage. Ce faisant, elles forcent les languettes 113 à fléchir vers l'extérieur dans une mesure correspondante.

Il est à noter à ce sujet que dans les modes de réalisation décrits, du fait que l'écartement entre les plans généraux des lamelles est constant, les dents 111 ne peuvent pas se trouver toutes en regard d'un intervalle séparant deux lamelles, ceci quelle que soit la valeur du pas d. Pour obtenir un tel résultat, il faudrait faire varier la largeur des dents et monter le dispositif 101 dans une orientation angulaire déterminée sur le garnissage, ce qui constitue une variante de l'invention.

En fonctionnement, comme indiqué par des flèches sur la Figure 18, l'étanchéité obtenue de la manière expliquée plus haut entre les languettes 109 et la virole 117 oblige la totalité du gaz montant à pénétrer dans le tronçon de garnissage. De plus, le liquide 118 ruisselant le long du bord d'extrémité vertical des lamelles, ainsi que le liquide éventuel 119 ruisselant le long de la virole, est guidé le long de chaque languette 113 jusqu'à la pointe 111A correspondante, ce qui tend à le renvoyer à l'intérieur du pack 102.

Ainsi, le dispositif 101 remplit non seulement les fonctions d'arrêt du gaz et du liquide contenus dans l'espace annulaire qui sépare le pack de la virole, mais également une fonction de renvoi du liquide dans le pack qui s'oppose à l'effet de paroi.

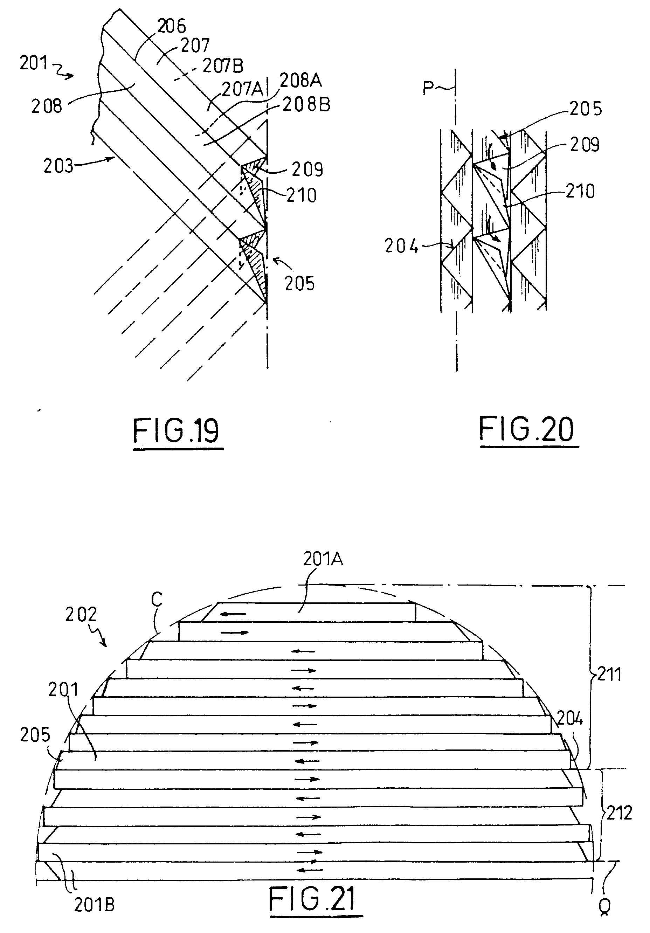

Chaque pack élémentaire de chaque tronçon de garnissage peut être tel que décrit dans le FR-A-2 630 819 au nom de la Demanderesse, dont le contenu doit être considéré comme incorporé par référence au présent mémoire. En variante, il peut être conforme à l'un des exemples qui vont être décrits ci-dessous, de façon générale, en regard des Figures 19 à 29.

La Figure 19 représente une lamelle métallique ondulée 201 destinée à la réalisation d'un tronçon ou "pack" cylindrique 202 (Figure 21) de garnissage ondulé-croisé.

La lamelle 201 a une forme rectangulaire et possède un plan général vertical P. Elle est ondulée en oblique; les ondes 203 ont une section triangulaire et descendent d'un premier bord vertical 204 de la lamelle à son bord vertical opposé 205. Dans le présent mémoire, on désigne le bord 204 par "bord haut" et le bord 205 par "bord bas". En considérant l'écoulement d'un liquide sur la lamelle, on peut aussi appeler "bord centripète" le bord 204 puisqu'une goutte de liquide déposée sur ce bord se dirige par gravité vers la zone médiane de la lamelle, et "bord centrifuge" le bord 205 pour une raison analogue.

Chaque onde 203 définit un sommet d'onde li-néaire 206, supposé en avant du plan de la Figure 19, et deux ailes supérieure 207 et inférieure 208 partant de ce sommet. Pour constituer le pack 202, un ensemble de lamelles telles que la lamelle 201, toutes de même hauteur, sont empilées les unes contre les autres, avec leurs ondes descendant alternativement dans un sens et dans l'autre, comme indiqué sur la Figure 19, où l'on a représenté en pointillé les ondes de la lamelle adjacente à la lamelle 201. Ainsi, en vue en bout (Figure 20), on voit alternativement le bord haut 204 d'une lamelle, le bord bas 205 de la lamelle suivante, le bord haut 204 de la lamelle suivante, etc.

Les lamelles sont de plus coupées à longueur de façon à s'inscrire approximativement dans un cercle C (Figure 21). Ainsi, la longueur des lamelles croît d'une valeur minimale pour une lamelle extrême 201A jusqu'à une valeur maximale pour les lamelles 201B situées à peu près dans le plan diamétral Q parallèle aux lamelles du pack, puis décroît de nouveau jusqu'à la valeur minimale précitée pour l'autre lamelle extrême.

Le bord haut 204 de chaque lamelle est coupé droit, sans déformation, et possède donc une configuration en zig-zag également répartie de part et d'autre du plan général vertical P de la lamelle.

En revanche, le bord bas 205 de chaque lamelle est déformé de façon asymétrique : une incision est pratiquée le long de chaque sommet d'onde 206 à partir du bord bas, et la partie d'extrémité de l'aile supérieure 207 ainsi définie est repliée vers le bas, en formant une première languette rabattue 209. Eventuellement, comme représenté, la partie d'extrémité de l'aile inférieure 208 est ensuite repliée vers le haut, en formant une deuxième languette rabattue 210. En vue en bout (Figure 20), la languette 210 recouvre alors partiellement la languette 209.

Comme on le voit sur la Figure 21, on distingue de chaque côté du plan diamétral Q deux zones, à savoir une zone radialement extérieure 211 dans laquelle la longueur de la corde du cercle C parallèle au plan Q varie nettement d'une lamelle à la suivante, et une zone médiane 212 dans laquelle cette longueur de corde varie peu d'une lamelle à la suivante.

Dans la zone 211, en partant de lamelles ayant sensiblement la longueur des cordes correspondantes, le simple rabattement des languettes 209 et 210 vers le plan Q a pour résultat que ces languettes se trouvent en regard d'une région d'extrémité de la lamelle plus longue adjacente, à une petite distance du bord haut de celle-ci.

En revanche, dans la zone 212, on risquerait ainsi de voir les languettes 209 et 210 se trouver au-delà du bord haut de la lamelle adjacente. Pour éviter ceci, il peut être préférable de raccourcir légèrement les lamelles du côté de leur bord bas, par rapport aux cordes du cercle C correspondantes, comme représenté sur la Figure 21. On recrée ainsi artificiellement dans cette zone 212 la condition obtenue naturellement dans la zone 211, à savoir le fait que les languettes 209, 210 sont rabattues vers la lamelle plus longue adjacente et se trouvent en regard d'une zone marginale de celle-ci.

En pratique, le cercle C est matérialisé par une ou plusieurs ceintures ou par une virole, avec des moyens d'étanchéité périphériques, notamment comme décrit ci-dessus et dans le FR-A-2 630 819 précité.

En fonctionnement, le garnissage met en relation d'échange de chaleur et de matière un gaz mon-tant et un liquide descendant. Ce dernier ruisselle sur les faces supérieures 207A et 208A et inférieures 207B et 208B, respectivement, des ailes 207 et 208.

Juste avant d'arriver au bord bas 205, le liquide se trouvant sur les faces 207A et 207B rencontre la languette 209, qui l'oblige à emprunter une direction de plus grande pente orientée vers la lamelle plus longue adjacente. Ce liquide est ainsi repris par les ondes centripètes de cette dernière et est renvoyé vers la zone médiane des lamelles.

De même, le liquide se trouvant sur les faces 208A et 208B est dévié, soit par la languette 209, dont le bord inférieur est proche de cette face, soit par la languette 210, vers la même lamelle adjacente, et est ainsi renvoyé lui aussi vers la zone médiane des lamelles.

Comme on le voit sur la Figure 21, le liquide a globalement tendance à être ramené non seulement vers la zone médiane des lamelles, mais également vers le plan diamétral Q.

L'accumulation de liquide à la périphérie du garnissage est ainsi très faible.

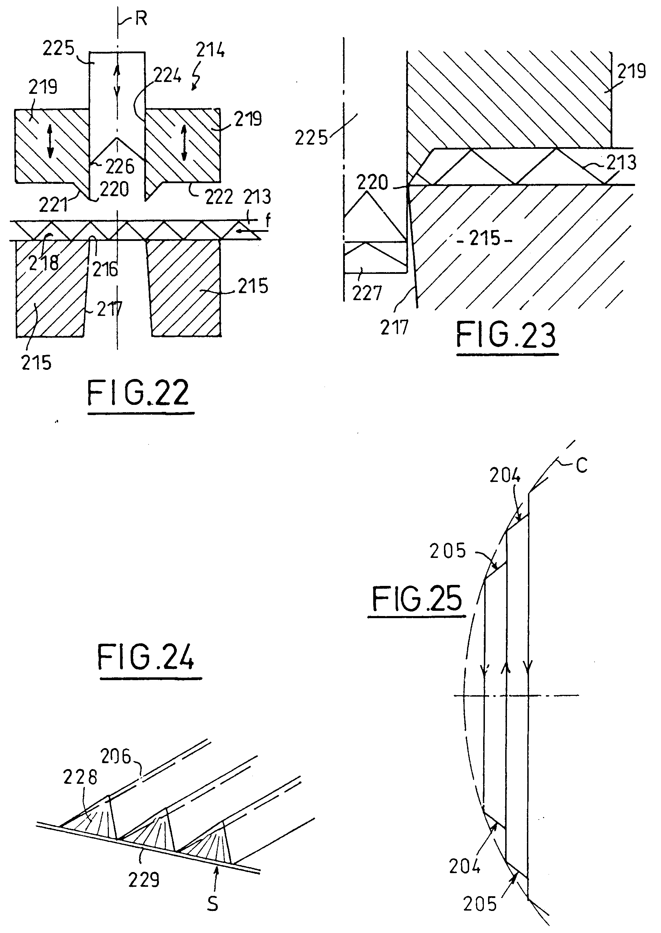

Au lieu de déformer le bord bas des lamelles par découpage-pliage comme aux Figures 19 et 20, on peut procéder par cisaillage asymétrique d'un feuillard ondulé 213, avec l'outillage 214 illustré aux Figures 22 et 23.

L'outillage, ou cisaille, 214 est symétrique par rapport à un plan vertical R perpendiculaire à la direction horizontale f de défilement du feuillard ondulé 213 de départ. Il comprend :
- deux couteaux inférieurs fixes 215 dont l'arête supérieure 216 est rectiligne, horizontale et parallèle au plan R. Les faces 217 en regard des deux couteaux 215 s'écartent légèrement l'une de l'autre vers le bas, et les arêtes 216 sont bordées extérieurement par des faces 218 horizontales sur lesquelles glisse le feuillard 213;
- deux presse-bande supérieurs 219, mobiles verticalement, qui présentent une arête inférieure 220 également rectiligne, horizontale et parallèle au plan R. Chaque arête 220 est située juste au-dessus de l'arête 216 correspondante et est bordée extérieurement par une face 221 inclinée à 30 à 60° environ sur la verticale, prolongée par une face horizontale 222. Chaque presse-bande présente en regard de l'autre une face 224 parallèle au plan R; et
- un double couteau supérieur 225 guidé à coulissement vertical entre les faces 224. Son extrémité inférieure a, vue perpendiculairement à la direction f (Figures 22 et 23), un profil en V inversé, ce qui définit deux arêtes de coupe 226 adjacentes aux faces 224. Chaque arête 226 a, par ailleurs, vue suivante la direction f, un profil en V inversé très évasé.

En fonctionnement, les presse-bande 219 et le couteau 225 étant relevés (Figure 22), on fait avancer la bande 213, en appui sur les deux couteaux 215, jusqu'à ce qu'une longueur prédéterminée de bande dépasse vers l'aval (en considérant la flèche f) de l'arête 216 aval.

On fait alors descendre les presse-bande 219, ce qui produit un double pincement de la bande 213 entre chaque arête 220 et l'arête 216 en regard, et réalise un étirement vers le bas du métal des deux zones transversales du feuillard adjacentes à ces arêtes, suivant le profil des faces 221, comme représenté sur la Figure 23.

Puis on fait descendre le couteau 25, ce qui découpe une chute 227 (Figure 23) entre les deux couteaux inférieurs 215 et détache une lamelle de longueur prédéterminée du côté aval.

On obtient ainsi, sur chaque bord découpé, la configuration de la Figure 24, où sont créées, à l'extrémité de chaque onde, des zones 228 en forme de triangle isocèle, dont les sommets se trouvent sur le sommets d'onde 206 et les bases dans le plan limite S opposé de la lamelle, dans le prolongement les unes des autres.

On comprend que les zones 228 ainsi formées sur le bord bas des lamelles assurent un effet de déviation du liquide analogue à celui créé par les languettes 209, 210 des Figures 19 et 20.

On remarque que du fait de la symétrie de la cisaille, le bord avant de la bande 213 non encore coupée à longueur a une configuration analogue, voire identique, au bord arrière de la lamelle qui vient d'être détachée. Par suite, chaque lamelle a des bords haut et bas similaires, comme représenté sur la Figure 25. Ceci est avantageux du point de vue de la fabrication et du montage des lamelles, et également du fait que l'on obtient ainsi une occupation plus complète de l'espace disponible dans le cercle C.

En pratique, du fait de la rigidité du métal ondulé et de la présence des trous dont sont habituellement pourvues les lamelles, l'étirage de la matière n'est pas parfaitement régulier, et les zones 228 ne sont pas parfaitement triangulaires mais peuvent présenter des écarts plus au moins importants par rapport à cette forme ainsi que des déchirures localisées. Il faut donc considérer la Figure 24 comme un schéma théorique. De plus, l'écrasement provoqué par la cisaille donne naissance à une petite bande aplatie 229 (Figure 24) le long du bord cisaillé.

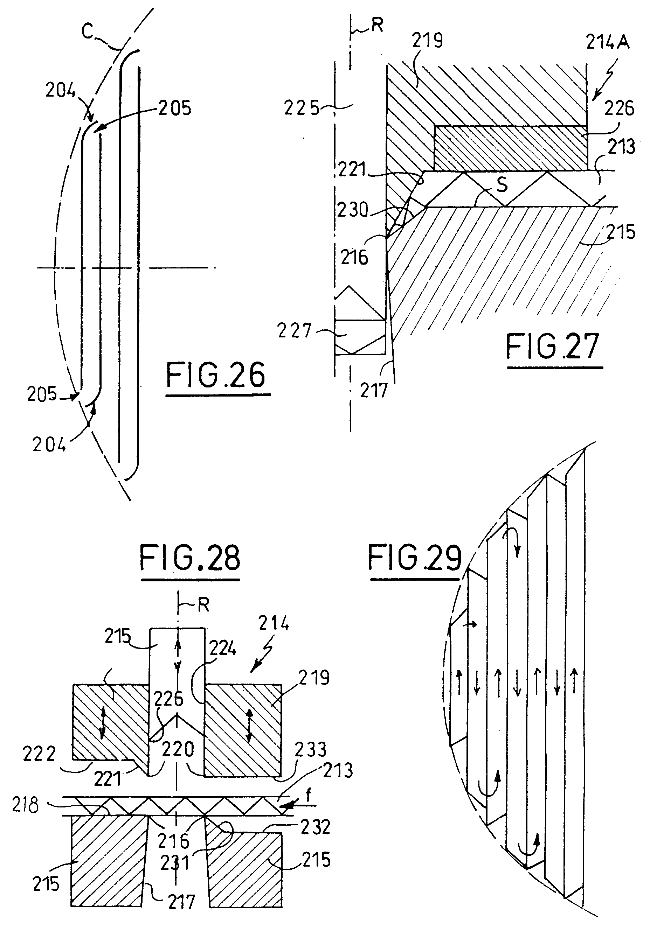

La Figure 26 représente un autre mode de réalisation du garnissage dans lequel le bord haut 204 de chaque lamelle est déformé jusqu'en regard de la tranche d'extrémité du bord bas 205 d'une lamelle adjacente, ce qui lui permet de reprendre le liquide ayant atteint ce bord bas et de le renvoyer vers la zone médiane des lamelles. Dans l'exemple représenté, les lamelles sont appariées, le bord haut de chaque lamelle de chaque paire étant en regard de la tranche d'extrémité du bord bas de l'autre lamelle de la même paire.

Pour obtenir une telle déformation des la-melles, on peut utiliser la cisaille modifiée 214A schématisée sur la Figure 27 : la face supérieure d'un couteau fixe 215 se termine par un pan coupé 230, incliné à environ 30° sur l'horizontale, dont le bord inférieur définit l'arête 216, et la face 221 du couteau supérieur 219 associée est allongée vers le bas de façon correspondante. Par suite, le pincement du feuillard 213 déforme son bord avant jusqu'au-delà du plan limite S, qui est le plan supérieur du couteau 215.

Il est à noter que dans ce mode de réalisation, le bord bas de chaque lamelle a une configuration différente de son bord haut. Il faut donc utiliser une cisaille non symétrique, dont la partie située de l'autre côté du plan R est par exemple telle que représentée à la Figure 22, pour obtenir un bord bas tel que représenté à la Figure 24, ou bien telle que représenté dans le FR-A-2 630 819, qui conduit à une configuration symétrique du bord bas réduisant elle aussi l'effet de paroi, ou encore un outil de coupe sans écrasement.

L'outillage représenté à la Figure 28 diffère de celui de la Figure 22 par les points suivants:
- le couteau 215 amont présente, à partir de son arête 216, une face descendante 231, inclinée de 30 à 60° sur l'horizontale, puis une face horizontale 232; et
- dans le presse-bande 219 amont, les faces 221 et 222 de la Figure 22 sont remplacées par une seule face horizontale 233 qui se termine par l'arête 220.

On comprend qu'une telle cisaille asymétrique conduit à des lamelles dont le bord arrière est tel que représenté à la Figure 24 mais dont le bord avant est déformé de façon analogue mais dans l'autre sens, c'est-à-dire comporte une bande étroite 229 dans l'autre plan limite de la lamelle.

On obtient ainsi avec un seul outillage tou-tes les lamelles du pack, lequel présente la configuration illustrée à la Figure 29. Ceci est également vrai dans le cas des Figures 26 et 27, alors que, dans l'exemple des Figures 22 à 25, deux outillages identiques sont nécessaires, chacun réalisant une lamelle sur deux.

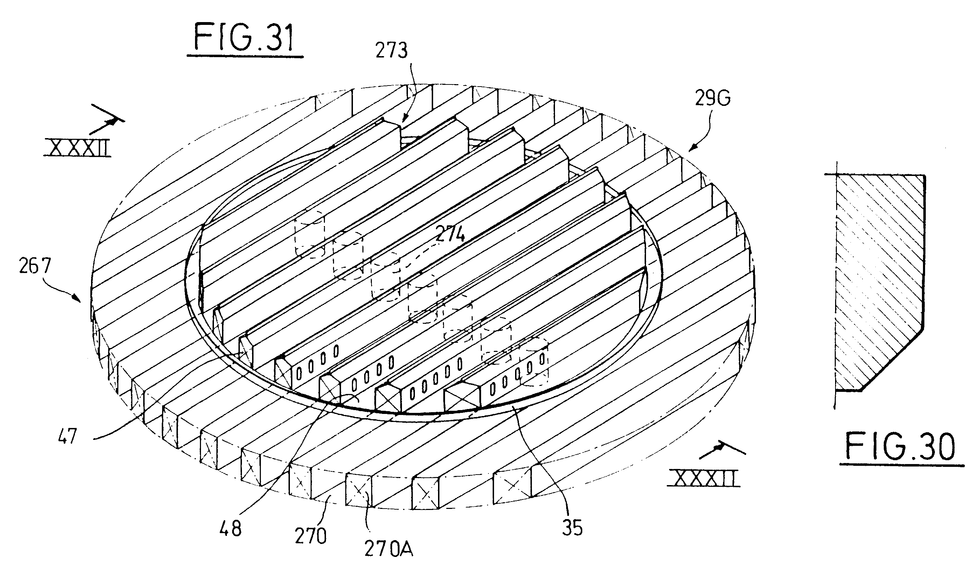

Le FR-A-2 630 819 précité décrit diverses caractéristiques des garnissages et de leur montage, permettant de réduire l'effet de paroi, qui peuvent être adoptées dans l'installation décrite ci-dessus. En variante ou en supplément, comme représenté à la Figure 30, la base des tronçons de garnissage peut présenter une forme tronconique convergente vers le bas.

Le distributeur 29G représenté aux Figures 31 à 34 est un autre type de distributeur adapté pour être pris en sandwich entre deux packs de garnissage, et plus particulièrement entre un pack inférieur de diamètre relativement grand et un pack supérieur de diamètre relativement petit. On l'a représenté à la place du distributeur 29A de la Figure 10, où le pack inférieur 24 est directement entouré par la virole 61 de la colonne.

Ce distributeur 29G est constitué de deux étages superposés :
- Un étage inférieur 267, espacé du pack inférieur 24 par les entretoises 84, qui est constitué d'une cornière périphérique 268 (non visible sur la Figure 31) fixée à la virole 61 par des supports 269, et d'une série de profilés en U 270 parallèles les uns aux autres, dont chacun présente un fond perforé 271 et deux ailes verticales se terminant chacune par un rebord horizontal 272. Les profilés sont maintenus en position par des entretoises d'extrémités hermétiques 270A.
- Un étage supérieur 273 de même constitution que le distributeur 29 des Figures 2 à 4, mais avec les différences suivantes : d'une part, les fonds 38 des espaces de liquide 49 ne sont pas perforés; d'autre part, à mi-longueur de chaque fond 38 (ou, en variante, à intervalles réguliers), un tube 274 part vers le bas. Des plaquettes 47 obturent complètement les extrémités des espaces de gaz 46.

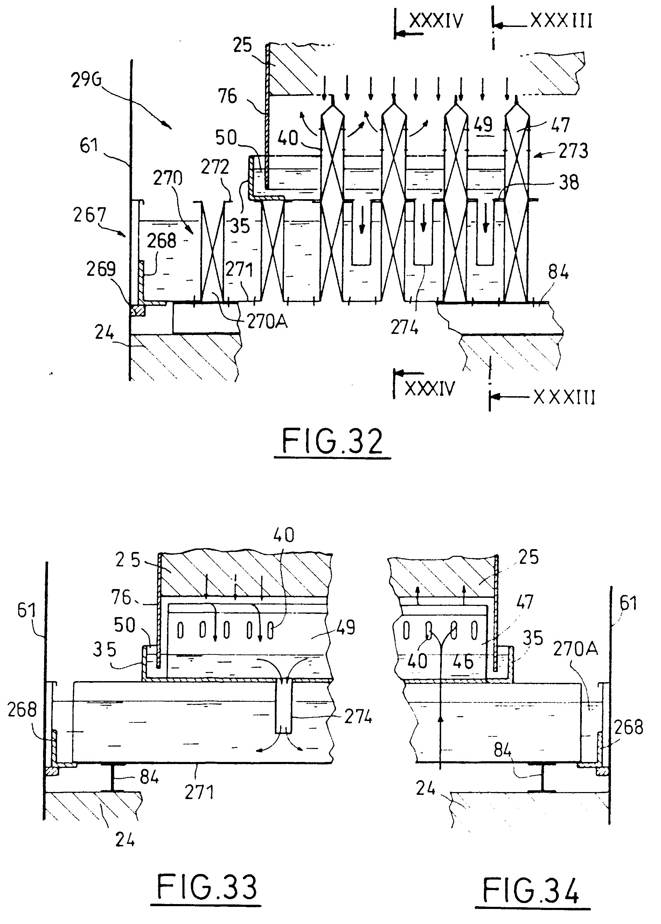

Comme on le voit à la Figure 32, l'étage 273 est agencé de façon que chaque espace de liquide 49 soit superposé à un profilé 270 et repose sur deux re- bords 272, de sorte que les tubes 274 pénètrent dans ces profilés. La virole 76 du pack supérieur 25 est prolongée vers le bas et pénètre dans le canal périphérique 50 de l'étage 273.

En fonctionnement (Figures 32 à 34), le liquide tombant du pack supérieur 25 est collecté dans les espaces 49 de l'étage 273 et descend dans les profilés 270 via les tubes 274, puis, de là, est distribué à travers les trous des profilés sur toute la surface du pack inférieur 24. On obtient ainsi au passage du distributeur une homogénéisation de la composition du liquide descendant. Il est à noter que tous les profilés 270 communiquent entre eux par leurs extrémités, de sorte qu'une goulotte périphérique emplie de liquide est définie autour de l'étage 267.

Simultanément, une partie du gaz montant issu du pack 24 passe entre les profilés 270 et parvient dans les espaces de gaz 46 de l'étage 273, puis est distribuée comme décrit plus haut, via les ori-fices 40, dans le pack 25.

Le reste du gaz montant passe librement entre les profilés 270, jusque dans l'espace annulaire compris entre les viroles 61 et 76. On obtient ainsi un fonctionnement très souple du distributeur, qui permet de soutirer des quantités très variables de gaz dans ledit espace annulaire sans perturber la bonne répartition des fluides dans les deux packs.

Comme indiqué à la Figure 32, les entretoises 84 sont disposées perpendiculairement aux profilés 270.

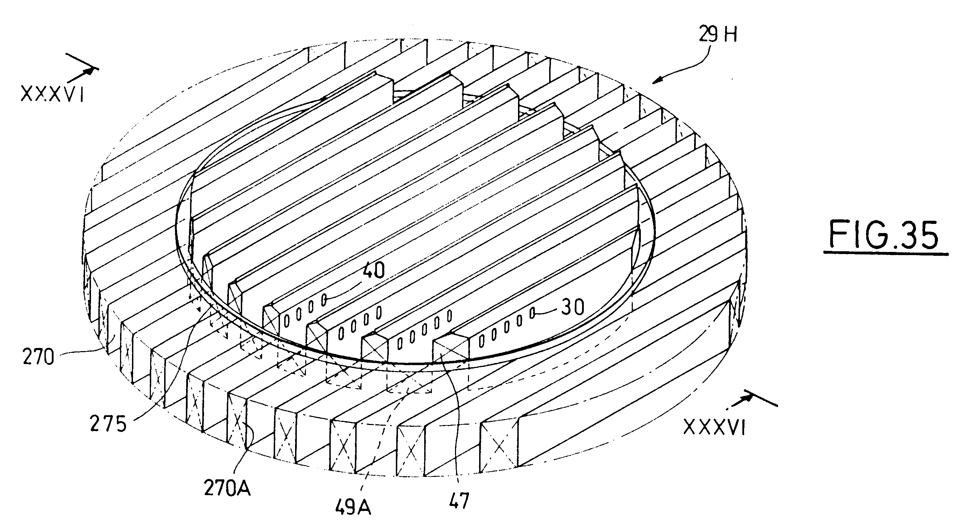

Les Figures 35 à 38 représentent un autre distributeur 29H à deux étages présentant sensiblement les mêmes avantages que le distributeur 29G. Ce distributeur 29H s'obtient, à partir de celui de la Figure 2, de la manière suivante.

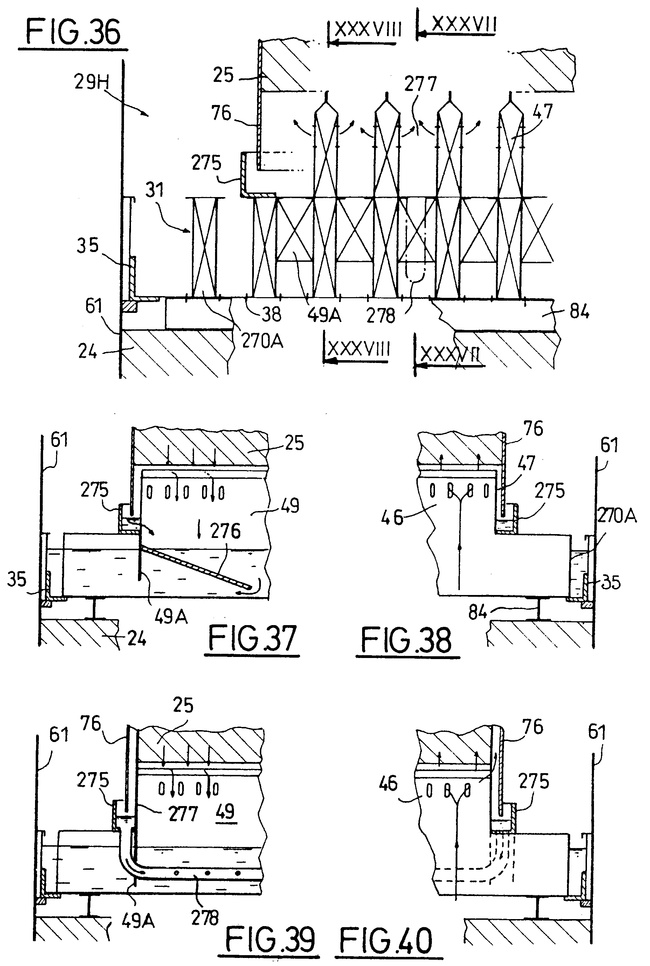

La cornière 35 ayant le diamètre de la virole 61, la partie supérieure des profilés 31 est éliminée de leurs extrémités jusqu'à peu près un cercle dont le diamètre correspond à celui du pack supérieur 25, ceci jusqu'à un niveau situé au-dessous des orifices 40. Une cornière 275 est disposée autour de la partie centrale en saillie des profilés 31, et la virole 76 pénètre de nouveau dans le canal périphérique ainsi défini. Les plaquettes 47 de la Figure 2 sont divisées en des plaquettes supérieures 47 et inférieures 270A analogues à celles des Figures 31 à 34. De plus, d'autres plaquettes verticales 49A obturent en largeur les extrémités des espaces 49, sont fixées par leur bord supérieur à la cornière 275 et s'étendent vers le bas jusqu'à une petite distance des fonds 38 (Figures 36 et 37).

En fonctionnement (Figures 36 à 38), le liquide descendant se rassemble sur les fonds 38, les espaces 49 communiquant entre eux, comme précédemment, par leurs extrémités, et ce liquide est distribué de là sur le pack inférieur 24. Le gaz montant passe en partie dans les espaces 46, et de là dans le pack supérieur 25 à travers les ouvertures 40, le reste de ce gaz parvenant librement dans l'espace annulaire compris entre les deux viroles 61 et 76. Les parties inférieures des plaquettes 49A forment un joint liquide entre la zone centrale et la zone périphérique du distibuteur.

Comme indiqué à la Figure 37, des plaques inclinées 276 partant des plaquettes 49A peuvent être prévues dans chaque profilé 31, afin d'assurer comme précédemment au passage du distributeur une homogénéisation du liquide descendant.

Les Figures 39 et 40 montrent une autre manière d'homogénéiser le liquide descendant, au passage du distributeur : les espaces de liquide 49 de l'étage supérieur du distributeur sont obturés à chaque extrémité par une plaquette 277 prolongeant vers le haut la plaquette 49A, et un tube 278 en forme générale de U relie deux points du canal périphérique de l'étage supérieur situés au-delà des deux plaquettes 277 correspondantes. Ce tube est perforé dans sa partie médiane, de sorte que le liquide descendant est ramené de la périphérie du pack 24 vers le milieu des espaces 49. Une plaquette 277 et un tube 278 ont été représentés en trait mixte à la Figure 36.

Inversement, lorsque le distributeur sandwich se trouve entre un tronçon supérieur de diamètre relativement grand et un tronçon inférieur de diamètre relativement petit, comme c'est le cas pour les distributeurs 29B et 29C, les fonds 38 ne sont perforés que dans la zone qui surplombe le tronçon inférieur.

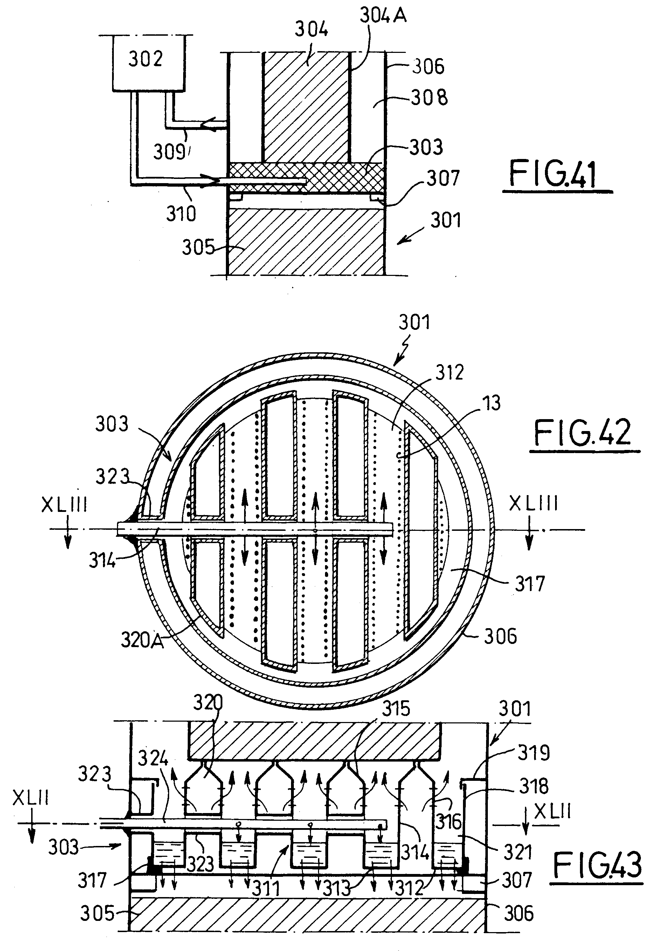

On a représenté à la Figure 41 une partie d'une installation de distillation d'air à double colonne avec production d'argon, à savoir la région de couplage de la colonne basse pression 301 de la double colonne et de la colonne 302 de production d'argon impur. Dans cette région de la colonne 301, un distributeur combiné 303 est pris en sandwich entre un tronçon de distillation supérieur 304 de diamètre relativement petit et un tronçon de distillation inférieur 305 de diamètre relativement grand qui, dans l'exemple représenté, est égal au diamètre intérieur de la virole principale 306 de la colonne 301. Le distributeur 303 est posé sur des supports 307 fixés dans la virole 306, et un espace libre de faible hauteur subsiste entre ce distributeur et le sommet du tronçon 305. En variante, des entretoises constituées de fers en I ou de fers plats pourraient être interposées entre le sommet du tronçon 305 et le distributeur 303, auquel cas ce dernier assurerait le contre-supportage du tronçon 305.

Le tronçon 304 est entouré d'une virole auxiliaire 304A, concentrique à la virole 306, qui délimite avec celle-ci un espace annulaire 308 au-dessus du distributeur 303. Une conduite de piquage argon 309 part de l'espace 308 et débouche dans la partie inférieure de la colonne 302, et une conduite de retour de liquide 310 part du fond de cette dernière et débouche dans la région centrale du distributeur 303, comme on le décrira plus en détail ci-dessous en regard des Figures 42 à 51.

Dans tous les modes de réalisation illustrés aux Figures 41 à 51, le distributeur 303 est tel que décrit dans la demande de brevet FR-A-2 655 877 précitée. Il comprend essentiellement une série de profilés parallèles 311 à section en U dont chacun comporte un fond plat 312 perforé de deux rangées de trous 313 et deux ailes verticales 314. Chaque aile se termine vers le haut par une partie 315 inclinée vers l'extérieur et présente, juste au-dessous de celle-ci, une rangée d'ouvertures 316, oblongues à grand axe vertical. Les extrémités des parties 315 des profilés adjacents sont fixées les unes aux autres, et les extrémités des fonds 312 ainsi que les bords des fonds 312 extrêmes sont fixés sur une cornière périphérique 317 d'où part vers le haut une jupe cylindrique 318.

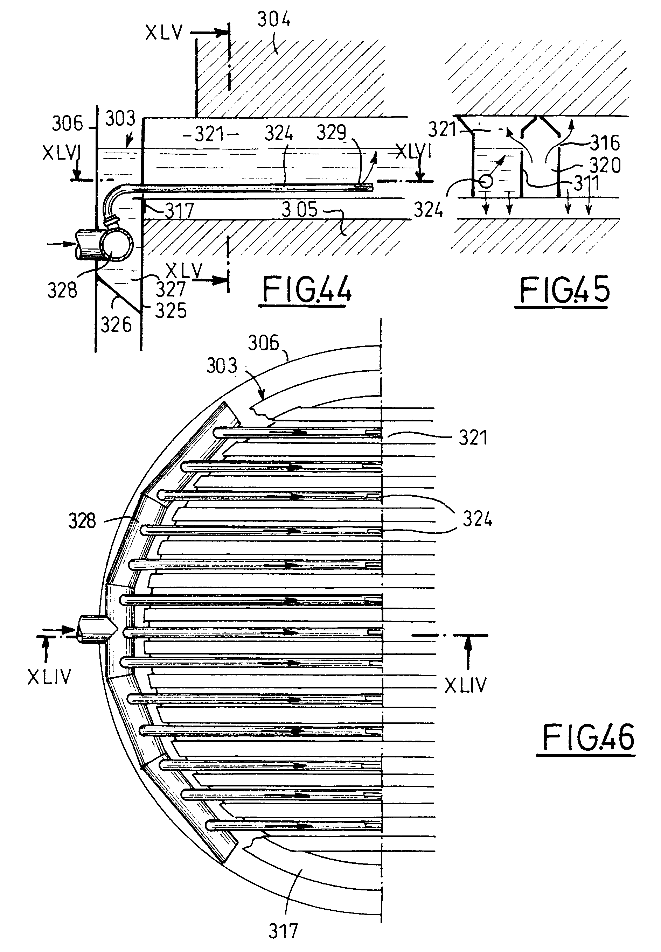

Dans l'exemple des Figures 42 et 43, la cornière 317 est directement posée sur les supports 307. De plus, un rebord périphérique 319 solidaire de la virole 306 recouvre l'extrémité supérieure de la jupe 318.

Ainsi sont définis, sous les parties obliques 315, des espaces de gaz 320 ouverts vers le bas, et, au-dessus des fonds 312, des espaces de liquide 321 ouverts vers le haut et dont les extrémités débouchent dans un même canal périphérique 322 défini par la cornière 317 et la jupe 318. Les espaces 320 sont fermés à leurs extrémités, au moins jusqu'au niveau du liquide dans les espaces 321, par des plaquettes 320A.

Un manchon 323 d'axe horizontal et perpendiculaire aux profilés 311 relie à joint étanche la virole 306 à la jupe 318 suivant un diamètre de la colonne. Au-dessous des ouvertures 316, les ailes 314 d'un certain nombre de profilés 311 sont percées d'une rangée de trous alignés avec le manchon 323 et reliées de façon étanche, dans les espaces de gaz 320, par d'autres manchons analogues.

Pour l'alimentation du distributeur 303, un tube 324, soudé à la virole 306, traverse tous les manchons 323, et il présente des perforations au droit des espaces de liquide 321 situés dans la région centrale du distributeur. Ce tube 324 est relié à la conduite 310 de la Figure 41.

Ainsi, en fonctionnement, le liquide appauvri en argon qui est renvoyé de la colonne 302 à la colonne 301 est déversé dans la région centrale du distributeur, se mélange au liquide plus riche en argon qui tombe du tronçon supérieur 304 dans les espaces 321 et chasse ce liquide plus riche, dans une certaine mesure, vers la périphérie de la colonne. On a constaté que ce phénomène améliore considérablement les performances de distillation dans la région inférieure de la colonne basse pression 301.

Les Figures 44 à 46 montrent une autre manière d'amener le liquide dans la région centrale du distributeur. Dans ce cas, le tronçon inférieur 305 est lui aussi contenu dans une virole auxiliaire 325, et un organe d'étanchéité annulaire 326 relie la partie supérieure de celle-ci à la virole principale 306. Le distributeur est dépourvu de jupe périphérique, de sorte que tous ses espaces de liquide 321 communiquent directement avec la goulotte périphérique 327 délimitée par les deux viroles et l'organe 326.

La conduite 310 de retour de liquide débouche dans un collecteur 328 de forme arquée positionné dans la goulotte 327, et une série de tubes 324 partent de ce collecteur et pénètrent longitudinalement dans chacun des espaces de liquide 321, au-dessous du niveau du liquide dans ces derniers. Tous les tubes 324 se terminent à peu près à mi-longueur des espaces 321, par un orifice de déversement 329. On obtient ainsi des phénomènes favorables analogues à ceux décrits plus haut.

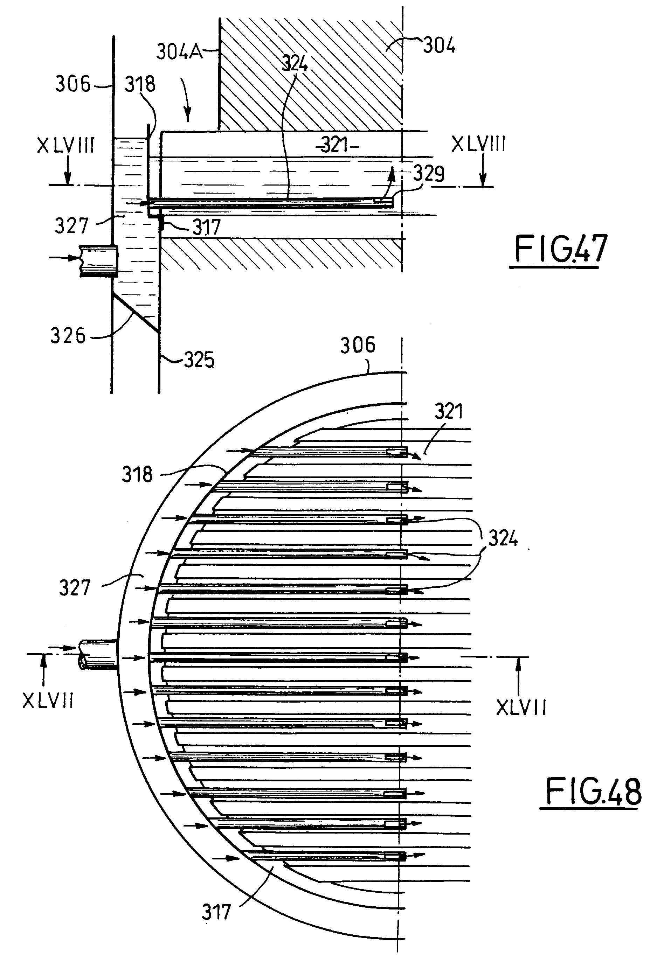

Le mode de réalisation des Figures 47 et 48 ne diffère du précédent que par le fait que la goulotte 327 sert elle-même de collecteur d'alimentation. Le distributeur 303 comporte la jupe périphérique 318, et les tubes 324 ont leur extrémité extérieure soudée à cette jupe. Dans ce cas, en fonctionnement, un niveau de liquide s'établit dans la goulotte 327, en fonction de la pression nécessaire pour que le liquide s'écoule hors des tubes 324.

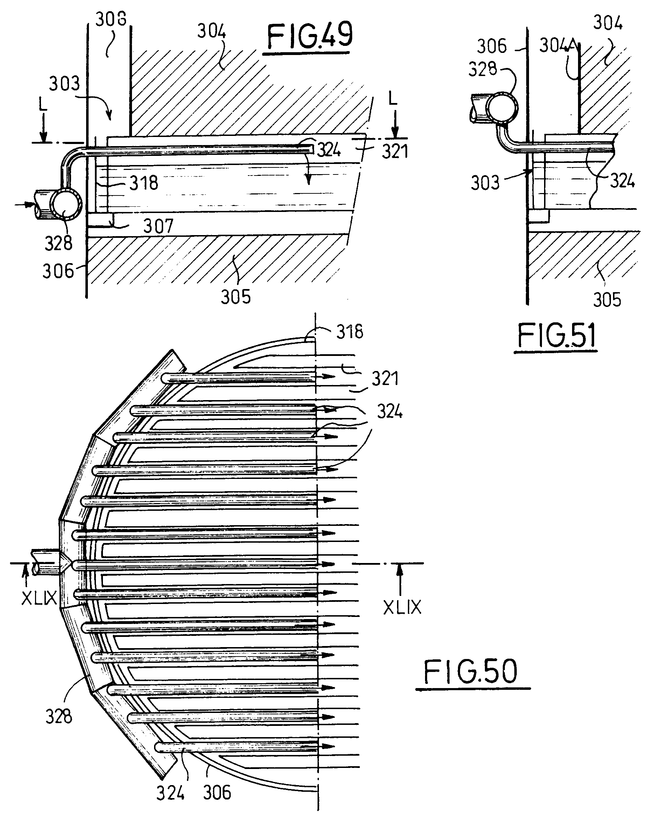

Dans le mode de réalisation des Figures 49 et 50, on retrouve une série de tubes 324 parallèles aux profilés 311 du distributeur, lequel comporte une jupe périphérique 318. Toutefois, comme aux Figures 42 et 43, le diamètre du tronçon inférieur 305 est égal au diamètre intérieur de la virole 306. Le collecteur d'alimentation arqué 328 est disposé à l'extérieur de la virole 306; les tubes 324 traversent à joint étanche cette dernière, à laquelle ils sont fixés par des soudures, et ils traversent librement la jupe 318. Pour cette raison, les tubes 324 se trouvent au-dessus du niveau du liquide dans le distributeur.

Comme représenté, le collecteur 328 peut se trouver au-dessous des tubes 324 (Figures 49 et 50) ou, en variante, en charge au-dessus de ces tubes (Figure 51).

## Revendications

1. Colonne de distillation d'air du type mettant en oeuvre sur au moins une partie de sa hauteur des empilements de packs de garnissage organisé du genre ondulé-croisé, chaque pack comprenant un paquet de lamelles ondulées rectangulaires (201) disposées chacune dans un plan général vertical et les unes contre les autres, les ondes (203) de chaque lamelle étant obliques et descendant, dans des sens opposés d'une lamelle à la suivante, d'un bord vertical haut (204) à un bord vertical bas (205) de la lamelle, caractérisée en ce qu'elle comprend :
- une virole principale (306);
- un premier tronçon de distillation, ou tronçon supérieur (304) à garnissage, délimité par une virole auxiliaire (304A) disposée dans la virole principale, les deux viroles délimitant entre elles un espace (308);
- des moyens (309) de sortie de gaz adaptés pour soutirer du gaz de cet espace;
- un second tronçon de distillation, ou tronçon inférieur (305), à garnissage, de plus grand diamètre que le premier tronçon et disposé sous celui-ci;
- un distributeur combiné (303) assurant le collectage du liquide tombant du tronçon supérieur dans le tronçon inférieur, le collectage du gaz issu du tronçon inférieur et sa redistribution dans le tronçon supérieur et dans l'espace (308), le supportage du tronçon supérieur; et
- des moyens (310, 324) d'entrée de liquide dans la colonne adaptée pour introduire du liquide essentiellement dans la région centrale du distributeur, de manière à déplacer vers la périphérie du distributeur du liquide déjà présent dans cette région centrale.

2. Colonne selon la revendication 1, caractérisée en ce que les moyens d'entrée de liquide (310) comprennent au moins un tube (324) qui traverse perpendiculairement au moins certaines des ailes (314) et qui présente des perforations au droit des espaces de liquide (321) situés dans ladite région centrale.

3. Colonne selon la revendication 1, caractérisée en ce que les moyens d'entrée de liquide comprennent au moins un tube (324) qui s'étend longitudinalement dans un espace de liquide (321) du distributeur et débouche à peu près à mi-longueur de celui-ci.

4. Colonne selon la revendication 3, caractérisée en ce que les moyens d'entrée de liquide comprennent une série de tubes parallèles (324) qui s'étendent chacun longitudinalement dans un espace de liquide (321) du distributeur pour déboucher à peu près à mi-longueur de celui-ci, les extrémités amont de ces tubes (324) étant reliées par un collecteur d'alimentation (328; 327) de forme arquée.

5. Colonne selon la revendication 4, caractérisée en ce que le collecteur (328) est disposé dans la virole principale (306).

6. Colonne selon la revendication 5, caractérisée en ce que les tubes (324) traversent à joint étanche une jupe périphérique (318) délimitant le canal périphérique (322) du distributeur (303).

7. Colonne selon la revendication 5 ou 6, caractérisée en ce que le collecteur (328) est un tuyau coudé disposé dans ledit espace annulaire (308) ou dans un espace annulaire prévu autour du distributeur (303) ou du tronçon de distillation inférieur (305).

8. Colonne selon la revendication 5 ou 6, caractérisée en ce que le collecteur est défini latéralement par la virole principale (306), une virole auxiliaire (325) du tronçon de distillation inférieur (305) et une jupe périphérique (318) délimitant le canal périphérique de ce dernier, et est défini inférieurement par un organe d'étanchéité (326) qui relie la virole auxiliaire (325) du tronçon inférieur à la virole principale (306).

9. Colonne selon la revendication 4, caractérisée en ce que le collecteur (328) est disposé à l'extérieur de la virole principale (306), et en ce que les tubes (324) traversent cette dernière à joint étanche et traversent librement une jupe périphérique (318) délimitant le canal périphérique (322) du distributeur (303), au-dessus du niveau du liquide dans les espaces de liquide (321) du distributeur.

10. Colonne selon l'une quelconque des revendications 1 à 9, caractérisée en ce que la colonne (301) est la colonne basse pression d'une double colonne de distillation d'air, et en ce que lesdits moyens de sortie de gaz (309) et d'entrée de liquide (310, 324) sont les conduites qui relient cette colonne basse pression (301) à une colonne (302) de production d'argon impur qui lui est couplée.
